# EUROPEAN PATENT SPECIFICATION

(11) **EP 3 299 415 B1**
(45) Date of publication and mention of the grant of the patent: **08.07.2020**
(21) Application number: 16796526.8
(22) Date of filing: 18.05.2016
(51) Int. Cl.: C08L 25/12, C08L 35/06, C08L 51/04, C08L 55/02, C08F 279/04, C08F 212/08, C08F 212/10

(54) **HEAT-RESISTANT RESIN COMPOSITION AND METHOD FOR PRODUCING SAME**
HITZEBESTÄNDIGE HARZZUSAMMENSETZUNG UND VERFAHREN ZUR HERSTELLUNG DAVON
COMPOSITION DE RÉSINE RÉSISTANT À LA CHALEUR ET SON PROCÉDÉ DE PRODUCTION

(30) Priority: 19.05.2015 JP 2015102064
(43) Date of publication of application: 28.03.2018
(73) Proprietor: Denka Company Limited, Tokyo 103-8338 (JP)
(72) Inventor: NISHINO, Kohhei, Ichihara-city Chiba 290-8588 (JP); SHINDO, Yuichi, Ichihara-city Chiba 290-8588 (JP); KUROKAWA, Yoshinari, Ichihara-city Chiba 290-8588 (JP)
(74) Representative: Gulde & Partner
(86) International application number: PCT/JP2016/064745
(87) International publication number: WO 2016/186133

(56) References cited:
- EP-A1- 1 932 861
- WO-A1-99/60040
- WO-A1-2013/048785
- JP-A- H 061 808
- JP-A- H04 126 745
- JP-A- H05 271 502
- JP-A- 2005 054 097
- RU-C2- 2 513 100

## Description

### Technical Field

The present invention relates to a VOC-reduced heat-resistant resin composition and manufacturing method thereof.

### Background Art

ABS resin is a thermoplastic resin containing acrylonitrile, butadiene and styrene as a main component. By utilizing its mechanical strength, appearance, chemical resistance, moldability, etc., it is widely used in automobiles, home electronics, OA equipment, residential building materials, daily necessities, and the like. On the other hand, in applications requiring heat-resistance such as automotive interior materials, the heat-resistance may be insufficient. Techniques for improving the heat-resistance are disclosed in JP 57-125242 A, JP 7-286086 A, JP 7-316384 A or WO02010/082617 A1, and maleimide-based copolymers, α-methylstyrene-based copolymers and the like are used. In recent years, reduction of VOC (abbreviation of Volatile Organic Compounds) dissipated from interior materials of automobiles is being studied.

RU 2513100 C2 discloses a heat-resistant resin composition containing a maleimide copolymer and an ABS resin. The composition is obtained by knead mixing and extruding both resin components.

EP 1932861 A1 discloses a heat resistant blend with reduced volatile components comprising an amorphous thermoplastic resin such as maleimide copolymer and a rubber polymer such as ABS or ASA resin.

JP 2005-054097 A describes a mixture of (N-substituted) maleimide-aromatic vinyl-unsaturated dicarboxylic acid anhydride heat-resistant thermoplastic resin and ABS resin.

WO 2013/048785 A1 discloses a devolatilization method of a brominated organic polymer. In the examples, a blended brominated polymer solution and a second thermoplastic polymer which is a polymer or copolymer of a vinyl aromatic monomer are used.

WO 99 60040 A1 discloses a thermoplastic resin composition containing a maleimide-based and/or unsaturated dicarboxylic anhydride-based copolymer, and a graft copolymer and a maleimide-based and/or unsaturated dicarboxylic anhydride-based copolymer. The amount of unreacted monomers in the maleimide copolymer is 200 ppm or less, and the total volatile component (unreacted monomer of maleimide copolymer and graft copolymer) is 0.5 mass% or less, more preferably 0.3 mass% or less.

JP H05-271502 A and JP H04126745 A disclose compositions comprising a maleimide-based copolymer and further resin components. The composition is blended with a higher aliphatic triglyceride and a polyether-ester thermoplastic elastomer.

JP H061808 A discloses a method for producing a polymer composition containing a maleimide copolymer and a volatile component.

### Summary of Invention

### Technical Problem

The present invention aims to provide a VOC reduced heat-resistant resin composition.

### Solution to Problem

(1) A heat-resistant resin composition comprising a maleimide-based copolymer (A) having a maleimide-based monomer unit and a styrene-based monomer unit, and resin (B), and the amount of a volatile component is less than 500 µg/g, wherein the resin (B) is at least one resin selected from ABS resin, ASA resin, AES resin, and SAN resin.
(2) The heat-resistant resin composition mentioned in (1), wherein the amount of the maleimide-based copolymer (A) is 5 to 45 mass%, and the amount of the resin (B) is 95 to 55 mass%, wherein the resin (B) is at least one resin selected from ABS resin, ASA resin, AES resin, and SAN resin.
(3) The heat-resistant resin composition mentioned in (1) or (2), wherein the maleimide-based copolymer (A) comprises 40 to 70 mass% of a maleimide-based monomer unit, 20 to 60 mass% of a styrene-based monomer unit, and 0 to 10 mass% of an unsaturated dicarboxylic anhydride monomer unit.
(4) The heat-resistant resin composition mentioned in any one of (1) to (3), wherein the deflection temperature under load is 85 °C or higher.
(5) The heat-resistant resin composition mentioned in any one of (1) to (4), wherein the total VOC amount measured in accordance with VDA 277 is less than 50 µgC/g,
(6) A molded article obtained by molding the heat-resistant resin composition mentioned in any one of (1) to (5).
(7) A method of producing a heat-resistant resin composition comprising a step of melt-kneading and devolatilization-extruding a maleimide-based resin (A) and a resin (B) to reduce the amount of a volatile component to less than 500 µg/g with an extruder, wherein the resin (B) is at least one resin selected from ABS resin, ASA resin, AES resin, and SAN resin.
(8) The method of producing a heat-resistant resin composition mentioned in (7), wherein the devolatilization-extrusion is carried out in a condition of adding water into the molten resin obtained by the melt-kneading method.
(9) The method for producing a heat-resistant resin composition mentioned in (7) or (8), wherein the devolatilization-extrusion is carried out in a condition of setting the cylinder temperature to 240 °C or higher.

### Advantageous Effects of Invention

The resin composition of the present invention is useful for automobiles, household application, OA equipment, residential building materials, daily necessities, etc. for its excellent in heat-resistance and balance of mechanical properties such as mechanical strength, appearance, chemical resistance, moldability and the like. Since VOC is reduced, it is particularly suitable for interior materials of automobiles.

### Description of Embodiments

### <Explanation of Terms>

In the present specification, for example, the expression of "A to B" means "A or more and B or less".

Hereinafter, embodiments of the present invention will be described in detail.

The resin composition of the present invention is obtained by melt-kneading and devolatilization-extrusion method with a maleimide-based copolymer (A) and at least one resin (B) selected from SAN resin, ABS resin, ASA resin and AES resin with an extruder.

The maleimide-based copolymer (A) is a copolymer having a maleimide-based monomer unit and a styrene-based monomer unit. In the present invention, it is also possible to have an unsaturated dicarboxylic acid anhydride monomer unit and an acrylonitrile monomer unit.

Examples of the maleimide-based monomer unit include N-alkylmaleimide such as, N-methylmaleimide, N-butylmaleimide, and N-cyclohexylmaleimide; and N-phenylmaleimide, N-chlorophenylmaleimide, N-methylphenylmaleimide, N-methoxyphenylmaleimide, and N-tribromophenylmaleimide. Among these, N-phenylmaleimide is preferred. The maleimide-based monomer unit can be used alone, or can be used in combination of two or more. For the maleimide-based monomer unit, for example, a raw material consisting of a maleimide-based monomer can be used. Alternatively, it can be obtained by imidizing a raw material consisting of an unsaturated dicarboxylic acid monomer unit with ammonia or a primary amine.

The styrene-based monomer unit is preferably selected from styrene, o-methylstyrene, m-methylstyrene, p-methylstyrene, 2,4-dimethylstyrene, ethylstyrene, p-tert-butylstyrene, α-methylstyrene, and α-Methyl-p-methylstyrene. Among them, styrene is preferred. The styrene-based monomer units can be used alone, or can be used in combination of two or more.

The unsaturated dicarboxylic acid anhydride-based monomer unit is preferably selected from maleic anhydride, itaconic anhydride, citraconic anhydride, and aconitic anhydride. Among them, maleic anhydride is most preferable. The unsaturated dicarboxylic acid anhydride-based monomer unit can be used alone, or can be used in combination of two or more.

The acrylonitrile-based monomer unit is preferably selected from acrylonitrile, methacrylonitrile, ethacrylonitrile, and fumaronitrile. Among them, acrylonitrile is preferable. Acrylonitrile-based monomer units can be used alone, or can be used in combination of two or more.

The constituent of the maleimide-based copolymer (A) is preferably 40 to 70 mass% of a maleimide-based monomer unit, 20 to 60 mass% of a styrene-based monomer unit, 0 to 10 mass% of an unsaturated dicarboxylic anhydride monomer unit, more preferably 45 to 60 mass% of the maleimide-based monomer unit, 35 to 55 mass% of the styrene-based monomer unit, 0 to 5 mass% of the unsaturated dicarboxylic anhydride monomer unit. When the maleimide-based monomer unit, the styrene-based monomer unit, and the unsaturated dicarboxylic anhydride monomer unit are within the above-mentioned ranges, the compatibility with the resin (B) which is at least one resin selected from ABS resin, SAN resin, ASA resin and AES resin described later is improved, and the impact strength of the resin composition is excellent. The amounts of the maleimide-based monomer unit and the styrene-based monomer unit are values measured by 13C-NMR.

From the viewpoint of efficiently improving the heat-resistance of the resin composition, the glass transition temperature of the maleimide-based copolymer (A) is preferably 175 °C to 200 °C. The glass transition temperature is a value measured by DSC under the following measurement conditions.
Device Name: Robot DSC6200 manufactured by Seiko Instruments Inc.
Programming Rate: 10 °C/min

The weight average molecular weight (Mw) of the maleimide-based copolymer (A) is preferably from 80,000 to 160,000, more preferably from 90,000 to 150,000. When the weight average molecular weight of the maleimide-based copolymer (A) is within the above range, the impact strength of the resin composition is excellent. In order to control the weight average molecular weight of the maleimide-based copolymer (A), there are methods such as adjusting the solvent concentration and the addition content of the chain transfer agent, in addition to adjusting the polymerization temperature, polymerization time, and the addition content of the polymerization initiator. The weight average molecular weight of the maleimide-based copolymer (A) is a polystyrene equivalent value measured by gel permeation chromatography (GPC) under the following conditions.
Device Name: SYSTEM-21 Shodex manufactured by Showa Denko K.K.
Column: Three PL gel MIXED-B series
Temperature: 40 °C
Detection: Differential refractive index
Solvent: Tetrahydrofuran
Concentration: 2 mass%
Calibration curve: it was prepared using standard polystyrene (PS) (PL Co., Ltd.)

As a method for producing the maleimide-based copolymer (A), a known method can be adopted. For example, there is a method of copolymerizing a monomer mixture comprising a styrene-based monomer, a maleimide-based monomer, an unsaturated dicarboxylic anhydride-based monomer, and other copolymerizable monomers. There is a method in which after copolymerizing a monomer mixture comprising the styrene-based monomer, the unsaturated dicarboxylic anhydride-based monomer, and other copolymerizable monomers, a part of the unsaturated dicarboxylic anhydride-based monomer unit is imidized by reacting with an ammonia or a primary amine, and converted into a maleimide-based monomer unit (Hereinafter referred to as "post imidization method")

The polymerization mode of the maleimide-based copolymer (A) is, for example, solution polymerization or bulk polymerization. The solution polymerization is preferable from the viewpoint that it is possible to obtain a maleimide-based copolymer (A) having a more uniform by carrying out polymerization while carrying out separate addition. The solvent for the solution polymerization is preferably non-polymerizable from the viewpoint that by-products are difficult to form and adverse effects are small. Examples thereof include ketones such as acetone, methyl ethyl ketone, methyl isobutyl ketone and acetophenone; ethers such as tetrahydrofuran and 1,4-dioxane; aromatic hydrocarbons such as benzene, toluene, xylene and chlorobenzene; N, N- dimethylformamide, dimethyl Sulfoxide, and N-methyl-2-pyrrolidone. Methyl ethyl ketone and methyl isobutyl ketone are preferable from the viewpoint of ease of solvent removal at the time of devolatilization recovery of the maleimide-based copolymer (A). The polymerization method is not particularly limited, but radical polymerization is preferable in view of manufacturing by a simple process with high productivity.

In the solution polymerization or bulk polymerization, a polymerization initiator and a chain transfer agent can be used, and the polymerization temperature is preferably in the range of 80 to 150 °C. Examples of the polymerization initiator include azole-based compoundsuch as azobisisobutyronitrile, azobiscyclohexanecarbonitrile and azobismethylbutyronitrile; peroxides such asbenzoyl peroxide, t-butyl peroxybenzoate, 1,1-di (t-butylperoxy) cyclohexane, t-butyl peroxy isopropyl monocarbonate, t-butyl peroxy-2-ethyl hexanoate, di-t-butyl peroxide, dicumyl peroxide, and ethyl-3,3-di- (t-butylperoxy) butyrate. One kind or a combination of two or more of these polymerization initiators may be used. From the viewpoint of controlling the reaction rate of polymerization and the polymerization rate, it is preferable to use an azo compound or organic peroxide having a 10-hour half-life temperature of 70 to 120 °C. The amount of the polymerization initiator to be used is not particularly limited, but it is preferably 0.1 to 1.5 mass%, more preferably 0.1 to 1 mass% with respect to 100 mass% of the total monomer units. It is preferable that the amount of the polymerization initiator used is 0.1 mass% or more, since sufficient polymerization rate can be obtained. When the amount of the polymerization initiator used is 1.5 mass% or less, the polymerization rate can be suppressed, so that the reaction control becomes easy and the target molecular weight can be easily obtained. Examples of the chain transfer agent include n-octyl mercaptan, n-dodecyl mercaptan, t-dodecyl mercaptan, α-methyl styrene dimer, ethyl thioglycolate, limonene, and terpinolene. The amount of the chain transfer agent used is not particularly limited as long as it is within the range where the target molecular weight can be obtained, but it is preferably 0.1 to 0.8 mass%, more preferably 0.15 to 0.5 mass% with respect to 100 mass% of the total monomer units. When the amount of the chain transfer agent used is 0.1 to 0.8 mass%, the target molecular weight can be easily obtained.

Introduction of the maleimide-based monomer unit of the maleimide-based copolymer (A) includes a method of copolymerizing maleimide-based monomers and a postimidization method. The postimidization method is preferable because the amount of residual maleimide-based monomer in the copolymer (A) is reduced. The postimidization method is a method in which after copolymerizing a monomer mixture comprising a styrene-based monomer, an unsaturated dicarboxylic anhydride-based monomer, and other copolymerizable monomers, imidizing a part of the unsaturated dicarboxylic anhydride-based monomer unit with an ammonia or a primary amine, so as to converting into the maleimide-based monomer unit. Examples of the primary amine include alkylamines such as methylamine, ethylamine, n-propylamine, iso-propylamine, n-butylamine, n-pentylamine, n-hexylamine, n-octylamine, cyclohexylamine, and decylamine; aromatic amine such as Chloro- or bromo-substituted alkylamine, aniline, toluidine, and naphthylamine. Among these, aniline is preferred. These primary amines may be used alone or in combination of two or more. In the postimidization, in the reaction of the primary amine and the unsaturated dicarboxylic anhydride monomer unit, a catalyst can be used to improve the dehydration cyclization reaction. The catalyst is, for example, tertiary amine such as trimethylamine, triethylamine, tripropylamine, tributylamine, N, N-dimethylaniline or N, N-diethylaniline. The postimidization temperature is preferably 100 to 250 °C, more preferably 120 to 200 °C. From the viewpoint of productivity, it is preferable that the temperature of the imidization reaction is 100 °C or higher, since the reaction rate can be improved. It is preferable that the temperature of the imidization reaction is 250 °C or lower, since the deterioration of physical properties due to thermal degradation of the maleimide-based copolymer (A) can be suppressed.

A known method can be adopted as a method (devolatilization method) for removing volatile components such as solvents used for solution polymerization and unreacted monomers from the solution after solution polymerization of the maleimide-based copolymer (A) or the solution after completion of the post-imidization. For example, a vacuum devolatilizing tank equipped with a heater or a devolatilizing extruder equipped with a vent can be used. The devolatilized molten maleimide-based copolymer (A) can be transferred to the granulation process, extruded from a porous die in a strand form, and extruded into a pellet shape by a cold cut method, an air hot cut method, or an underwater hot cut method.

The total amount of the monomer and the solvent remaining in the maleimide-based copolymer (A) is preferably less than 2,000 µg/g, more preferably less than 1,500 µg/g. The amount of the remaining monomer or the solvent can be adjusted by polymerization conditions and devolatilization conditions, and is a value determined by gas chromatography.

The amount of the maleimide-based copolymer (A) in the resin composition is preferably 5 to 45 mass%, more preferably 7 to 35 mass%, further preferably 10 to 30 mass%. If the amount of the maleimide-based copolymer (A) is too small, the heat-resistance of the resin composition may not be sufficiently improved. If it is too large, the fluidity may be lowered and the moldability may be deteriorated.

The resin B is selected from ABS resin, ASA resin, AES resin, SAN resin, and can be used alone, or two or more kinds can be used in combination.

The ABS resin, ASA resin, and AES resin are graft copolymers obtained by graft copolymerizing at least a styrene-based monomer and an acrylonitrile-based monomer to a rubbery polymer. For example, when a butadiene rubber such as polybutadiene or styrene-butadiene copolymer is used as the rubbery polymer, the resin (C) is ABS resin. When an acrylic-based rubber comprising butyl acrylate or ethyl acrylate is used, the resin (C) is ASA resin. When an ethylene-based rubber such as ethylene-α-olefin copolymer is used, the resin (C) is AES resin. At the time of graft copolymerization, two or more of these rubbery polymers can be used in combination.

As a method for producing a graft copolymer of an ABS resin etc., a known method can be adopted, for example, a production method by emulsion polymerization or continuous mass polymerization. The method by emulsion polymerization is preferable because the content of the rubbery polymer in the final resin composition can be easily adjusted.

As a method for producing a graft copolymer by emulsion polymerization, there is a method in which a styrene-based monomer and an acrylonitrile-based monomer are emulsion-graft-copolymerized with a rubber-like polymer latex (hereinafter referred to as "emulsion graft polymerization method"). A latex of the graft copolymer can be obtained by emulsion graft polymerization method.

In the emulsion graft polymerization method, water, an emulsifier, a polymerization initiator, and a chain transfer agent are used, and the polymerization temperature is preferably in the range of 30 to 90 °C. Examples of the emulsifier include anionic surfactant, onion surfactant, and amphoteric surfactant. Examples of the polymerization initiator include organic peroxides such as cumene hydroperoxide, diisopropylbenzene peroxide, t-butyl peroxyacetate, t-hexyl peroxybenzoate, t-butyl peroxybenzoat; persulfates such as potassium persulfate and ammonium persulfate; azo-based compounds such as azobisbutyronitrile; reducing agents such as iron ion; secondary reducing agents such as sodium formaldehyde sulfoxylate; and chelating agents such as Ethylenediaminetetraacetic acid disodium etc. Examples of the chain transfer agent include n-octyl mercaptan, n-dodecyl mercaptan, t-dodecyl mercaptan, α-methyl styrene dimer, ethyl thioglycolate, limonene, and terpinolene.

The latex of the graft copolymer can be solidified by a known method to recover the graft copolymer. For example, a coagulant is added to the latex of the graft copolymer to solidify it, and the graft copolymer is washed and dehydrated in a dehydrator, and subjected to a drying step, thereby a powdery graft copolymer is obtained.

The amount of the monomer remaining in the powdery graft copolymer obtained by the emulsion graft polymerization method is preferably less than 5,000 µg/g, more preferably less than 8,000 µg/g. The amount of the residual monomer can be adjusted by polymerization condition, and is a value determined by gas chromatography.

From the viewpoint of impact-resistance, the content of the rubbery polymer in the graft copolymer obtained by the emulsion graft polymerization method is preferably 40 to 70 mass% of preferably, more preferably 45 to 65% by mass. The content of the rubbery polymer can be adjusted by, for example, the use ratio of the styrene-based monomer and the acrylonitrile-based monomer to the rubbery polymer at the time of the emulsion graft polymerization.

From the viewpoint of impact-resistance and chemical resistance, the constitutional units excluding the rubbery polymer of the graft copolymer obtained by the emulsion graft polymerization method are preferably 65 to 85 mass% of a styrene-based monomer unit, and 15 to 35 mass% of an acrylonitrile-based monomer unit.

The gel component of the graft copolymer is preferably in the form of particles. The gel component is a rubbery polymer particle obtained by graft copolymerizing a styrene-based monomer and an acrylonitrile-based monomer, which is insoluble in an organic solvent such as methyl ethyl ketone or toluene, and separated by centrifugal separation. In some cases, an occlusion structure in which a styrene-acrylonitrile copolymer is encapsulated in particles is formed inside the rubbery polymer particles. When the graft copolymer and the styrene-acrylonitrile copolymer are melt blended, the gel component exists as a dispersed phase in the form of particles in the continuous phase of the styrene-acrylonitrile copolymer. The gel content is a value calculated as follows. The graft copolymer of mass W is dissolved in methyl ethylene ketone, and centrifuged at 20,000 rpm using a centrifuge to precipitate the insoluble matter, and the supernatant liquid is removed by decantation to obtain the insoluble matter, and from the mass S of dried insoluble matter after vacuum drying, the gel amount (mass%) = (S/W) × 100 is calculated. Similarly, the resin composition obtained by melt blending the graft copolymer and the styrene-acrylonitrile copolymer is dissolved in methyl ethyl ketone and centrifuged, thereby the gel amount can be calculated.

From the viewpoint of the impact-resistance and the appearance of the molded article, the volume average particle diameter of the gel component of the graft copolymer is preferably in the range of 0.10 to 1.0 µm, more preferably 0.15 to 0.50 µm. The volume average particle diameter is a value calculated as follows. Ultra thin sections are cut out from the pellets of a resin composition obtained by melt blending a graft copolymer and a styrene-acrylonitrile copolymer, observed with a transmission electron microscope (TEM), and calculated from the image analysis of particles dispersed in the continuous phase. The volume average particle size can be adjusted by, for example, the particle diameter of the latex of the rubbery polymer used in the emulsion graft polymerization. The particle diameter of the latex of the rubbery polymer can be adjusted by the method of adding the emulsifier and the content of water used during the emulsion polymerization, in order to obtain a preferable range, the polymerization time is long and the productivity is low, so that there is a method in which rubbery polymers having a particle diameter of about 0.1 µm is polymerized in a short time and the rubber particles are enlarged by chemical aggregation method or physical aggregation method.

The graft ratio of the graft copolymer is preferably 10 to 100 mass%, more preferably 20 to 70 mass% from the viewpoint of impact-resistance. The graft ratio is a value calculated from the graft ratio (mass%) = [(G - RC)/RC] × 100 based on the gel content (G) and the content of the rubbery polymer (RC). The graft ratio represents the content of the styrene-acrylonitrile copolymers contained in per unit mass of the rubbery polymer. The styrene-acrylonitrile copolymers may be bonded to particles of the rubbery polymer by the graft or may be encapsulated in the particles. The graft ratio can be adjusted by, for example, the ratio of the monomer and the rubbery polymer, the kind and content of the initiator, the content of the chain transfer agent, the content of emulsifier, polymerization temperature, feeding method (lump/multistage/continuous), and addition rate of monomer during the emulsion graft polymerization.

The degree of toluene swelling of the graft copolymer is preferably 5 to 20 times from the viewpoint of impact-resistance and appearance of the molded article. The degree of toluene swelling represents the degree of crosslinking of the particles of the rubbery polymer, and is calculated as follows. The graft copolymer is dissolved in toluene, insoluble matter is separated by centrifugation or filtration, and a value is calculated from the ratio of the mass in a state of being swollen with toluene and the mass in a dry state where toluene is removed by vacuum drying. The degree of toluene swelling, for example, is influenced by the degree of crosslinking of the rubbery polymer used in the emulsion graft polymerization, and can be adjusted by initiator, emulsifier, polymerization temperature, addition of polyfunctional monomer such as divinylbenzene, etc. during the emulsion polymerization of the rubbery polymer.

The SAN resin is a copolymer having a styrene-based monomer unit and an acrylonitrile-based monomer unit, such as a styrene-acrylonitrile copolymer.

As other copolymerizable monomers of the SAN resin, (meth) acrylic acid ester-based monomer such as methyl methacrylate; acrylic ester-based monomer such as butyl acrylate and ethyl acrylate; (meth) acrylic acid-based monomer such as methacrylic acid; acrylic acid-based monomer such as acrylic acid; N-substituted maleimide-based monomer such as N-phenyl maleimide can be used.

The constituent unit of the SAN resin is preferably 60 to 90 mass% of styrene-based monomer unit and 10 to 40 mass% of vinyl cyanide monomer unit, more preferably 65 to 80 mass% of styrene-based monomer unit and 20 to 35 mass% of vinyl cyanide monomer unit. When the constituent unit is within the above range, the balance between impact strength and fluidity of the obtained resin composition is excellent. The amount of the styrene-based monomer unit and vinyl cyanide monomer unit are values measured by 13C-NMR.

As a production method of the SAN resin, a known method can be adopted. For example, it can be produced by bulk polymerization, solution polymerization, suspension polymerization, or emulsion polymerization. As an operation method of the reaction apparatus, any of the continuous type, batch type, semi-batch type can be applied. From the viewpoint of quality and productivity, bulk polymerization or solution polymerization is preferable, and continuous type is preferable. Examples of the solvents for bulk polymerization or solution polymerization include alkylbenzene such as benzene, toluene, ethylbenzene and xylem; ketone such as acetone and methyl ethyl ketone; and aliphatic hydrocarbon such as hexane and cyclohexane.

For bulk polymerization or solution polymerization of SAN resin, a polymerization initiator and a chain transfer agent can be used, and the polymerization temperature is preferably in the range of 120 to 170 °C. Examples of the polymerization initiator include peroxy ketal such as 1,1-di (t-butylperoxy) cyclohexane, 2,2-di (t-butylperoxy) butane, 2,2-di (4,4-di-t-butylperoxycyclohexyl) propane, 1,1-di (t-amylperoxy) cyclohexane; hydroperoxide such as cumene hydroperoxide and t-butyl hydroperoxide; alkyl peroxide such as t-butyl peroxyacetate and t-amyl peroxy isononanoate; dialkyl peroxide such as t-butyl cumyl peroxide, di-t-butyl peroxide, dicumyl peroxide, di-t-hexyl peroxide; peroxyester such as t-butyl peroxyacetate, t-butyl peroxybenzoate and t-butylperoxy isopropyl monocarbonate; peroxy carbonate such as t-butyl peroxy isopropyl carbonate and polyether tetrakis (t-butyl peroxy carbonate); N, N'-azobis (cyclohexane-1-carbonitrile), N, N'-azobis (2-methylbutyronitrile), N, N'-azobis (2,4-dimethylvaleronitrile), and N, N'-azobis [2- (hydroxymethyl) propionitrile]. These polymerization initiators may be used alone or in combination of two or more. Examples of the chain transfer agent include n-octyl mercaptan, n-dodecyl mercaptan, t-dodecyl mercaptan, α-methyl styrene dimer, ethyl thioglycolate, limonene, and terpinolene.

A known method can be adopted as a devolatilization method for removing unreacted monomers and volatile components such as solvents used for solution polymerization from the solution after completion of polymerization of SAN resin. For example, a vacuum devolatilizing tank equipped with a heater or a devolatilizing extruder equipped with a vent can be used. The devolatilized molten SAN resin can be transferred to the granulation process, extruded from the porous die in a strand form, and processed into a pellet shape by a cold cut method, an air hot cut method, or an underwater hot cut method.

The total amount of the monomer and the solvent remaining in the SAN resin is preferably less than 2,000 µg/g, more preferably less than 1,500 µg/g. the amount of the residual monomer and the solvent can be adjusted by devolatilization conditions and is a value determined by gas chromatography.

The weight average molecular weight of SAN resin is preferably 50,000 to 250,000, more preferably 70,000 to 200,000 from the viewpoint of impact-resistance and moldability of the resin composition. The weight average molecular weight of SAN resin is a polystyrene equivalent value measured in a THF solvent using gel permeation chromatography (GPC), and is a value measured by the same method as that of the copolymer (A). The weight average molecular weight can be adjusted by the kind and content of the chain transfer agent, the solvent concentration, the polymerization temperature, the kind and content of the polymerization initiator.

The resin (B) can be prepared, for example, by using a powdered ABS resin obtained by emulsion polymerization method and a pelletized SAN resin obtained by continuous bulk polymerization method. In addition, the resin (B) can be prepared by pelletizing a resin obtained by melt blending, in an extruder, a powdered ABS obtained by emulsion polymerization method and a pelletized SAN resin obtained by continuous bulk polymerization method.

As a method of melt-kneading and devolatilizing-extruding, in an extruder, the maleimide-based copolymer (A) and at least one resin (B) selected from ABS resin, ASA resin, AES resin, SAN resin, a known method can be adopted. As the extruder, known devices such as twin-screw extruder, single screw extruder, multi-screw extruder, continuous kneader with biaxial rotor can be used. Meshing type co-rotating twin-screw extruder is widely used in general and can be suitably used. Also, a plurality of these extruders can be used in combination.

The extruder is composed of a kneading portion for melt-kneading the maleimide-based copolymer (A) and the resin (B) and at least one devolatilizing portion. Firstly, it is melted in the kneading part and kneaded to have uniform composition. The kneading part is configured by combining known mixing elements such as kneading disk. From the viewpoint of kneadability, it is preferable to use element set in the downstream of the kneading part, which acts to push back the molten resin to the upstream side. Examples of such elements include reversed lead full flight, reversed shifting kneading, and seal ring.

The heat-resistant resin composition melt-kneaded in the kneading part is transferred to the devolatilizing part in molten state, and volatile components are devolatilized by a vacuum vent. The devolatilized molten heat-resistance composition is extruded from a porous die in a strand form, and then a heat-resistance resin composition in the form of pellets is obtained by a cold cut method, an air hot cut method, or an underwater hot cut method.

As a method of devolatilization-extrusion, water devolatilization method by adding water before the devolatilizing part is preferable for its excellent devolatilizing efficiency. There is a method, for example, after the maleimide-based copolymer (A) and the resin (B) are melt-kneaded in the kneading part, water is uniformly kneaded and dispersed into the molten resin within another kneading part, and then devolatilizing the volatile components together with the water at the upstream devolatilizing part. It is preferable that the kneading part for kneading and the kneading part for adding water are both in the state of being filled fully. The amount of water added is preferably 0.05 to 2.0 mass%, with respect to the resin composition. In addition, the water content of the maleimide-based copolymer (A) and the resin (B) are effective to improve the efficiency of the devolatilization, but if it is too much, it may cause a problem in operating the extruder.

The cylinder temperature of the kneading part and the devolatilizing part of the extruder is preferably set to be 240 °C or higher, more preferably 260 °C or higher, further preferably 280°C or higher. Setting the cylinder temperature high may increase the efficiency of the devolatilization. In particular, since the heat-resistant resin composition using the maleimide-based copolymer is excellent in thermal stability, it is possible to reduce volatile components by setting the cylinder temperature high. On the other hand, since the heat-resistant resin composition using the α-methylstyrene-based copolymer is inferior in thermal stability, when the cylinder temperature is set high, a large amount of α-methylstyrene produced by thermal decomposition is contained. In addition, the cylinder temperature is preferably 320 °C or lower, more preferably 300 °C or lower. The pressure of the devolatilizing part is preferably set to 10 mmHg or less when water is not added, and to 40 mmHg or less when water is added.

The amount of the volatile component in the heat-resistant resin composition is less than 500 µg/g, preferably less than 400 µg/g. The term of "volatile component" means a monomer and a solvent component derived from the maleimide-based copolymer (A), α-methylstyrene-based copolymer and resin (B); the substances derived from the monomer remaining from the beginning and solvent components; and the substances derived from the monomer components produced by thermal decomposition. If the amount of the volatile component is too large, the amount of the VOC dissipated from the molded article may increase.

The amount of volatile component calculated from the constituent of the maleimide-based copolymer (A) and resin (B) supplied by extruder is preferably 3,000 µg/g, more preferably 2,700 µg/g. if the amount before extrusion is too large, it may be difficult to reduce the content in the resin composition.

The amount of the rubbery polymer in the resin composition is preferably 10 to 20 mass%. If it is too small, the impact-resistance may be lowered. If it is too much, the rigidity and deflection temperature under load may be lowered.

The acrylonitrile-based monomer unit in the continuous phase obtained by separating the gel component from the resin composition is preferably 15 to 35 mass%, more preferably 20 to 30 mass%. If it is too small, the impact resistance decreases, if it is too large, the fluidity decreases. The component of the continuous phase is obtained by dissolving the resin composition with methyl ethyl ketone, separating gel as insoluble matter with centrifugation, and finally extracting the supernatant liquid by decantation precipitated with methanol.

The deflection temperature under load of the resin composition was obtained by the flat wise method with the stress of 1.8 MPa, in accordance with JIS K 7191-1, -2. The deflection temperature under load is preferably 85 °C or higher, more preferably 90 °C or higher. The higher the deflection temperature under load, the more the applicable products are added. The deflection temperature under load can be adjusted by the amount of the maleimide-based copolymer (A) or that of the rubbery polymer in the composition.

The total amount of VOC measured in accordance with VDA 277 of the resin composition is preferably less than 50 µgC/g, more preferably less than 40 µgC/g, further preferably less than 30 µgC/g. VDA 277 is a VOC measurement method standardized by the German Automobile Manufacturers Association and is a method of measuring the total VOC amount using a head space gas chromatograph. Samples of 10 to 25 mg were collected from the molded article, and sealed in a vial. After heating at 120 °C for 5 hours, air inside the vial is collected with a headspace sampler and measured with a gas chromatograph. The total VOC amount is obtained by calculating acetone from the total peak area of the gas chromatogram and convert it into carbon. Unit of µgC/g means carbonic weight in microgram per gram of sample.

The heat-resistant resin composition can be blended with other compositions as the effects of the present invention being not impaired, such as, other resin components, impact modifier, fluidity modifier, hardness modifier, antioxidants, inorganic fillers, matting agents, flame retardants, flame retardant aid, anti-drip agents, sliding property imparting agent, heat dissipating material, electromagnetic wave absorbing material, plasticizers, lubricants, mold release agents, ultraviolet absorbers, light stabilizers, antibacterial agents, antifungal agents, antistatic agents, carbon black, titanium oxide, pigments, and dyes.

As a molding method of the heat-resistant resin composition, a known method can be adopted. For example, there are injection molding, sheet extrusion molding, vacuum molding, blow molding, foam molding, and hetero-extrusion molding. At the time of molding, the thermoplastic resin composition is usually processed after being heated to be 200 to 280 °C, preferably 210 to 270 °C. For instance, molded articles can be used for automobiles, household appliances, OA equipment, residential building materials, or daily necessities. Since the heat-resistant resin composition of the present invention is excellent in thermal stability, The amount of volatile components does not change significantly even molding at a high temperature. On the other hand, in the heat-resistant resin composition using an α-methylstyrene-based copolymer, α-methylstyrene is formed and contained in a large amount in the molded article due to thermal decomposition of the α-methylstyrene-based copolymer, depending on the resin temperature in the molding machine and the residence time.

### EXAMPLES

The present invention will be described in detail with reference to examples below. It is noted that the invention is not limited to the specific embodiments described hereinafter.

### <Manufacturing Example of maleimide-based copolymer (A-1)>

To an autoclave having a capacity of about 25 L equipped with an agitator, 65 parts by mass of styrene, 7 parts by mass of maleic anhydride, 0.3 parts by mass of 2,4-diphenyl-4-methyl-1-pentene, 25 parts by mass of methyl ethyl ketone were added. After replacing the inside of the system with nitrogen gas, the temperature was raised to 92 °C. A solution in which 28 parts by mass of maleic anhydride and 0.18 part by mass of t-butylperoxy-2-ethylhexanoate were dissolved in 100 parts by mass of methyl ethyl ketone was added continuously for 7 hours. After the addition, 0.03 part by mass of t-butylperoxy-2-ethylhexanoate was further added, and the temperature was raised to 120 °C. The reaction was further continued for 1 hour to obtain a polymer solution of styrene-maleic anhydride copolymer. Then, 32 parts by mass of aniline and 0.6 part by mass of triethylamine were added to the polymer solution, and reacted at 140 °C for 7 hours. The polymer solution after the imidization reaction was fed to a vent type screw extruder, and volatile components were removed, so that a maleimide-based copolymer (A-1) in pellet form was obtained. The amount of the volatile component in maleimide-based copolymer (A-1) was 990 µg/g of styrene. The constituent units were 51 mass% of styrene unit, 48 mass% of N-phenyl maleimide unit, 1 mass% of maleic anhydride unit. The glass transition temperature measured by DSC was 186 °C. The weight average molecular weight was 101,000.

### <Manufacturing Example of Maleimide-based copolymer A-2>

To an autoclave having a capacity of about 25 L equipped with an agitator, 60 parts by mass of styrene, 8 parts by mass of maleic anhydride, 0.2 part by mass of 2,4-diphenyl-4-methyl-1-pentene, 25 parts by mass of methylethyl ketone were added. After replacing the inside of the system with nitrogen gas, the temperature was raised to 92 °C. A solution in which 32 parts by mass of maleic anhydride and 0.18 part by mass of t-butylperoxy-2-ethylhexanoate were dissolved in 100 parts by mass of methyl ethyl ketone was added continuously for 7 hours. 0.03 part by mass of t-butylperoxy-2-ethylhexanoate was further added, and the temperature was raised to 120 °C. The reaction was further continued for 1 hour to obtain a polymer solution of styrene-maleic anhydride copolymer. Then, 37 parts by mass of aniline and 0.6 part by mass of triethylamine were added to the polymer solution, and reacted at 140 °C for 7 hours. The polymer solution after the imidization reaction was fed to a vent type screw extruder, and volatile components were removed, so that the maleimide-based copolymer (A-1) in pellet form was obtained. The content of the volatile component in the maleimide-based copolymer (A-1) was 740 µg/g of styrene. The constituent units were 46 mass% of styrene unit, 53 mass% of N-phenylmaleimide unit, 1 mass% of maleic anhydride unit. The glass transition temperature measured by DSC was 197 °C. The weight average molecular weight was 131,000.

### <Manufacturing Example of ABS Resin>

ABS resin was prepared by emulsion graft polymerization method. To a reactor equipped with an agitator, 97 parts by mass of polybutadiene latex (solid concentration: 50 mass%, average particle diameter: 0.3 µm), 12 parts by mass of a styrene-butadiene latex having a styrene content of 24 mass% (solid concentration: 70 mass%, average particle diameter: 0.5µm), 1 part by mass of sodium stearate, 0.2 part by mass of sodium formaldehyde sulfoxylate, 0.01 part by mass of ethylenediaminetetraacetic acid tetrasodium, 0.005 part by mass of ferrous sulfate, and 200 parts of pure water were added. The temperature was heated to 50 °C. Then 43 parts by mass of a monomer mixture of 75 mass% of styrene and 25 mass% of acrylonitrile, 0.2 part by mass of t-dodecyl mercaptan, 0.06 parts by mass of t-butyl peroxyacetate were continuously added separately and for 5 hours. After completion of separate addition, 0.04 part by mass of diisopropyl enesemoxide was added and the polymerization was completed at 70 °C. for 2 hours to obtain a latex of ABS resin. To the obtained latex, 0.3 part of Irganox 1076 (manufactured by Ciba Specialty Chemicals Co., Ltd.) was added. Coagulation was carried out using magnesium sulfate and sulfuric acid so that the pH of the slurry at the time of solidification was 6.8. After washing and dehydrating, drying was carried out, and powdered ABS resin was obtained. The rubbery polymer content is 57 mass%, based on the compounding ratio of the raw materials. In the constituent unit excluding the rubbery polymer, the styrene unit was 75 mass% and the acrylonitrile unit was 25 mass% as measured by NMR. From the observation of the transmission electron microscope after forming the resin composition, the ABS resin was dispersed in the form of particles and the volume average particle diameter was 0.4 µm. The amount of volatile components in the ABS resin was 6,000 µg/g of styrene, and acrylonitrile which is less than the lower limit of detection (30 µg/g).

### <Manufacturing Example of SAN Resin>

SAN resin was prepared by continuous bulk polymerization. One complete mixing tank type stirring tank was used as a reactor and polymerization was carried out with a capacity of 20 L. A raw material solution containing 60 mass% of styrene, 22 mass% of acrylonitrile, 18 mass% of ethylbenzene was prepared and continuously fed to the reactor at a flow rate of 6.5 L/h. Further, with respect to the raw material solution, 160 ppm of t-butyl peroxyisopropyl monocarbonate as a polymerization initiator and 400 ppm of n-dodecyl mercaptan as a chain transfer agent were continuously added to the feed line of the raw material solution. The reaction temperature of the reactor was adjusted to be 145 °C. The polymer solution continuously withdrawn from the reactor was supplied to a vacuum devolatilizing tank equipped with a preheater to separate unreacted styrene, acrylonitrile, ethylbenzene. The temperature of the preheater was adjusted so that the polymer temperature in the devolatilization tank was 225 °C. and the pressure in the devolatilizing tank was 0.4 kPa. The polymer was withdrawn from the vacuum devolatilizing tank by a gear pump, extruded in a strand shape, cooled with cooling water, and then cut to obtain a pelletized SAN resin. The amount of volatile components in SAN resin copolymer was 680 µg/g of styrene, 60 µg/g of acrylonitrile, and 750 µg/g of ethylbenzene. The constituent units were 74 mass% of styrene unit, and 26 mass% of acrylonitrile unit. in addition, the weight average molecular weight was 145,000.

### <αMS-AN copolymer>

As α-methylstyrene-acrylonitrile copolymer (αMS-AN copolymer), a commercially available product was used. The amount of volatile components in the αMS-AN copolymer was 1,150 µg/g of α-methylstyrene and 130 µg/g of acrylonitrile. In addition, the constituent units were 67 mass% of α-methylstyrene unit, and 33 mass% of acrylonitrile unit. The weight average molecular weight was 95,000.

### < Example 1-4, Comparative Example 1∼3 >

A maleimide-based copolymer, ABS resin, SAN resin and α-methylstyrene-acrylonitrile copolymer were melt-kneaded and devolatilized and extruded using an extruder according to the formulation shown in Table 1 to obtain a resin composition. A twin-screw extruder (TEM-35B manufactured by Toshiba Machine Co., Ltd.) was used as the extruder. As a constitution of the extruder, a kneading part for melting-kneading each resin was provided, and then a kneading part was provided for adding water and kneading, and thereafter a devolatilizing part was provided. The extrusion temperature (the cylinder temperature of the kneading part and the devolatilizing part) was set to the set temperature shown in Table 1, and the extrusion was carried out at a screw rotation speed of 250 rpm and at feed rate of 30 Kg/hour. Water was added to be 0.5 mass% with respect to the feed rate, and the pressure in the devolatilizing part was 10 mmHg. The obtained resin composition was evaluated as follows. The evaluation results are shown in Tables 1 and 2.

### (The melt mass flow rate)

The melt mass flow rate is measured at 220°C under 98N, in accordance with JIS K7210.

### (Vicat Softening Temperature)

The vicat softening temperature is measured in accordance with JIS K7206. Here, Method 50 (load: 50N, programming rate: 50°C/hour) was used, and the specimen having a size of 10nm × 10nm and a thickness of 4mm was used. HDT&VSPT tester manufactured by Toyo Seiki Seisaku-sho, Ltd. was used as a measuring device.

### (Deflection temperature under load)

The deflection temperature under load is measured by the flat wise method (1.8 MPa stress) with a specimen having a size of 80 mm × 10 mm and a thickness of 4 mm, in accordance with JIS K 7190-1, -2. HDT&VSPT tester manufactured by Toyo Seiki Seisaku-sho, Ltd. was used as a measuring device.

### (Charpy Impact Strength)

The charpy impact strength was measured using a notched specimen in accordance with JIS K 7111-1, and a striking direction adopted Edgewise. A digital impact tester manufactured by Toyo Seiki Seisaku-sho, Ltd. was used as the measuring machine.

### (The Amount of the volatile components)

The amount of maleimide-based copolymer, ABS resin, SAN resin, α-methylstyrene-acrylonitrile copolymer, volatile components in the resin composition were measured by gas chromatography. In the measurement of styrene (Sty), α-methylstyrene-acrylonitrile copolymer (AMS) and ethylbenzene (EB), 0.3 to 0.4 g of resin composition was weighted in an Erlenmeyer flask of 50 mL and dissolved by 10 mL of DMF containing an internal standard (cyclopentanol) as a pretreatment, and carried out under the following conditions.
Device Name: GC-12A manufactured by Shimadzu Corporation
Detector: FID
Column: 3 m glass column (filler: liquid phase PEG 20 M + TCEP(15+5))
Temperature: ING 150 °C DET 150 °C column 115 °C
Injection volume: 1 µL

In the measurement of acrylonitrile (AN), 0.5 to 0.7 g of the resin composition was weighted in an Erlenmeyer flask of 50 mL and dissolved by 10 mL of DMF containing an internal standard (o-xylene) as a pretreatment, and carried out under the following conditions.
Device Name: GC-12A manufactured by Shimadzu Corporation
Detector: FID
Column: 1 m glass column (filler: liquid phase PEF 20 M + TCEP (15+5) + SE 30)
Temperature: IN J 150 °C DET 150 °C Column 115 °C
Injection volume: 1 µL

### (Total VOC amount)

The total VOC amount according to VDA 277 was measured using a molded body obtained by injection molding resin of Example 1 and Comparative Example 1. A mirror surface plate having a length of 90 mm, a width of 50 mm and a thickness of 2 mm was prepared by using an injection molding machine of IS-50EPN manufactured by Toshiba Machine Co., Ltd. at cylinder temperature of 250 °C and 270 °C, and a molding temperature of 70 °C. Using the obtained mirror surface plate, the total VOC amount according to VDA 277 was measured and the results are shown in Table 2.

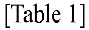

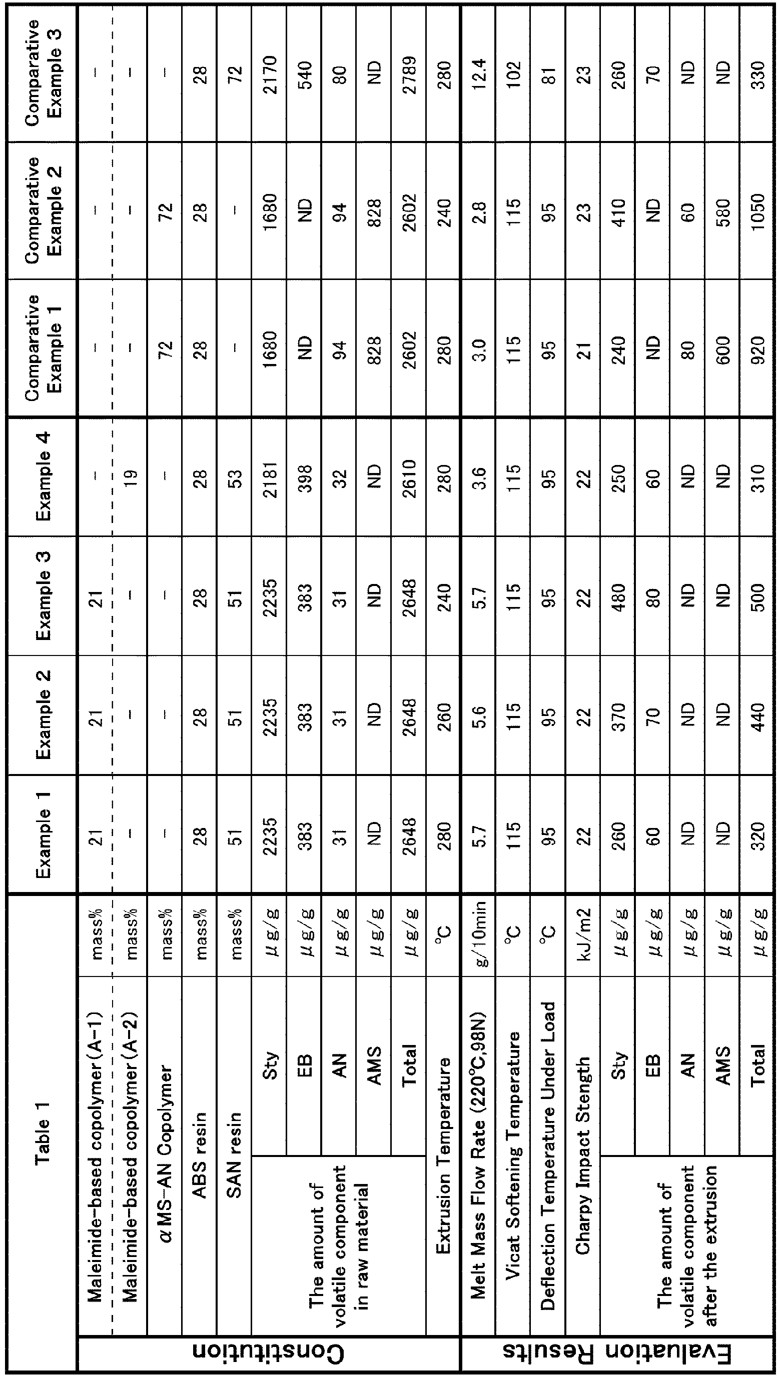

**[Table 2]**

| Table 2 | | | Example 1 | | | Comparative Example 1 | | |
|---|---|---|---|---|---|---|---|---|
| | | | Extruded Pellets | Molded at 250 °C | Molded at 270 °C | Extruded Pellets | Molded at 250 °C | Molded at 270 °C |
| The amount of volatile component after injection molding | Sty | *µ*g/g | 260 | 230 | 220 | 240 | 210 | 210 |
| | EB | *µ*g/g | 60 | 60 | 50 | ND | ND | ND |
| | AN | *µ*g/g | ND | ND | ND | 80 | 80 | 100 |
| | AMS | *µ*g/g | ND | ND | ND | 600 | 700 | 820 |
| | Total | *µ*g/g | 320 | 280 | 270 | 920 | 990 | 1130 |
| Total VOC Amount (VDA277) | | *µ*gC/g | - | 21 | 18 | - | 61 | 74 |

According to the results in Table 1, in examples using the maleimide-based copolymer, the amount of volatile component can be reduced, and the heat-resistance and impact-resistance are excellent. On the other hand, the comparative example using the αMS-AN copolymer contains many volatile components, in particular, the reduction of α-methylstyrene volatile component is difficult to do. According to the results in Table 2, in the example, the volatile component does not increase in the molding process, whereas the comparative example does. Further, in the molded article of example, the total VOC amount is suppressed to be a low level.

### Industrial Applicability

By using the resin composition of the present invention, it is possible to reduce the VOC dissipated from the molded article, and it is also excellent in both of heat-resistance and impact-resistance, so that it is suitable for automobiles, household appliances, OA equipment, residential building materials, or daily necessities.

## Claims

1. A heat-resistant resin composition comprising:
a maleimide-based copolymer (A) having a maleimide-based monomer unit and a styrene-based monomer unit, and
a resin (B), wherein the resin (B) is at least one resin selected from ABS resin, ASA resin, AES resin, and SAN resin,
**characterized in that** the amount of a volatile component is less than 500 µg/g.

2. The heat-resistant resin composition of claim 1, wherein the amount of the maleimide-based copolymer (A) is 5 to 45 mass%, and the amount of the resin (B) is 95 to 55 mass%.

3. The heat-resistant resin composition according to claim 1 or 2, wherein the maleimide-based copolymer (A) comprises 40 to 70 mass% of a maleimide-based monomer unit, 20 to 60 mass% of a styrene-based monomer unit, and 0 to 10 mass% of an unsaturated dicarboxylic anhydride monomer unit.

4. The heat-resistant resin composition according to any one of claims 1 to 3, wherein the deflection temperature under load is 85 °C or higher.

5. The heat-resistant resin composition according to any one of claims 1 to 4, wherein the total VOC amount measured in accordance with VDA 277 is less than 50 µgC/g.

6. A molded article obtained by molding the heat-resistant resin composition according to any one of claims 1 to 5.

7. A method for producing a heat-resistant resin composition comprising a step of melt-kneading and devolatilization-extruding a maleimide-based resin (A) and a resin (B) with an extruder to reduce the amount of a volatile component to less than 500 µg/g, wherein the resin (B) is at least one resin selected from ABS resin, ASA resin, AES resin, and SAN resin.

8. The method for producing a heat-resistant resin composition of claim 7, wherein the devolatilization-extrusion is carried out in a condition of adding water into the molten resin obtained by the melt-kneading.

9. The method for producing a heat-resistant resin composition according to claim 7 or 8, wherein the devolatilizing extrusion is carried out in a condition of setting the cylinder temperature to 240 °C or higher.

## Patentansprüche

1. Hitzebeständige Harzzusammensetzung, umfassend:
ein Copolymer auf Maleinimidbasis (A) mit einer Monomereinheit auf Maleinimidbasis und einer Monomereinheit auf Styrolbasis, und
ein Harz (B), wobei das Harz (B) mindestens ein Harz, ausgewählt aus ABS-Harz, ASA-Harz, AES-Harz und SAN-Harz, ist,
**dadurch gekennzeichnet, dass** die Menge einer flüchtigen Komponente weniger als 500 µg/g beträgt.

2. Hitzebeständige Harzzusammensetzung nach Anspruch 1, wobei die Menge des Copolymers auf Maleinimidbasis (A) 5 bis 45 Masse-% beträgt, und die Menge des Harzes (B) 95 bis 55 Masse-% beträgt.

3. Hitzebeständige Harzzusammensetzung nach Anspruch 1 oder 2, wobei das Copolymer auf Maleinimidbasis (A) 40 bis 70 Masse-% einer Monomereinheit auf Maleinimidbasis, 20 bis 60 Masse-% einer Monomereinheit auf Styrolbasis und 0 bis 10 Masse-% einer ungesättigten Dicarbonsäureanhydrid-Monomereinheit umfasst.

4. Hitzebeständige Harzzusammensetzung nach einem der Ansprüche 1 bis 3, wobei die Verformungstemperatur unter Belastung 85 °C oder höher ist.

5. Hitzebeständige Harzzusammensetzung nach einem der Ansprüche 1 bis 4, wobei die gemäß VDA 277 gemessene Gesamtmenge an VOC weniger als 50 µg C/g beträgt.

6. Geformter Gegenstand, erhalten durch Formen der hitzebeständigen Harzzusammensetzung nach einem der Ansprüche 1 bis 5.

7. Verfahren zur Herstellung einer hitzebeständigen Harzzusammensetzung, umfassend einen Schritt des Schmelzknetens und Entgasungsextrudierens eines Harzes auf Maleinimidbasis (A) und eines Harzes (B) mit einem Extruder, um die Menge einer flüchtigen Verbindung auf weniger als 500 µg/g zu verringern, wobei das Harz (B) mindestens ein Harz, ausgewählt aus ABS-Harz, ASA-Harz, AES-Harz und SAN-Harz, ist.

8. Verfahren zur Herstellung einer hitzebeständigen Harzzusammensetzung nach Anspruch 7, wobei die Entgasungsextrusion bei einer Bedingung des Hinzugebens von Wasser in das durch das Schmelzkneten erhaltene geschmolzene Harz durchgeführt wird.

9. Verfahren zur Herstellung einer hitzebeständigen Harzzusammensetzung nach Anspruch 7 oder 8, wobei die Entgasungsextrusion bei einer Bedingung des Einstellens der Zylindertemperatur auf 240 °C oder höher durchgeführt wird.

## Revendications

1. Composition de résine résistante à la chaleur comprenant :
un copolymère à base de maléimide (A) ayant une unité monomère à base de maléimide et une unité monomère à base de styrène, et
une résine (B), la résine (B) étant au moins une résine choisie parmi une résine ABS, une résine ASA, une résine AES, et une résine SAN,
**caractérisée en ce que** la quantité d'un composant volatil est inférieure à 500 µg/g.

2. Composition de résine résistante à la chaleur selon la revendication 1, dans laquelle la quantité du copolymère à base de maléimide (A) est de 5 à 45 % en masse, et la quantité de la résine (B) est de 95 à 55 % en masse.

3. Composition de résine résistante à la chaleur selon la revendication 1 ou 2, dans laquelle le copolymère à base de maléimide (A) comprend 40 à 70 % en masse d'une unité monomère à base de maléimide, 20 à 60 % en masse d'une unité monomère à base de styrène, et 0 à 10 % en masse d'une unité monomère anhydride dicarboxylique insaturé.

4. Composition de résine résistante à la chaleur selon l'une quelconque des revendications 1 à 3, dans laquelle la température de distorsion sous une charge est de 85 °C ou plus.

5. Composition de résine résistante à la chaleur selon l'une quelconque des revendications 1 à 4, dans laquelle la quantité totale de COV mesurée conformément à VDA 277 est inférieure à 50 µgC/g.

6. Article moulé obtenu en moulant la composition de résine résistante à la chaleur selon l'une quelconque des revendications 1 à 5.

7. Procédé de production d'une composition de résine résistante à la chaleur comprenant une étape de malaxage à l'état fondu et d'extrusion avec dégazage d'une résine à base de maléimide (A) et d'une résine (B) avec une extrudeuse pour réduire la quantité d'un composant volatil à moins de 500 µg/g, la résine (B) étant au moins une résine choisie parmi une résine ABS, une résine ASA, une résine AES, et une résine SAN.

8. Procédé de production d'une composition de résine résistante à la chaleur selon la revendication 7, dans lequel l'extrusion avec dégazage est réalisée dans une condition d'ajout d'eau dans la résine fondue obtenue par le malaxage à l'état fondu.

9. Procédé de production d'une composition de résine résistante à la chaleur selon la revendication 7 ou 8, dans lequel l'extrusion avec dégazage est réalisée dans une condition de réglage de la température de cylindre à 240 °C ou plus.
